# EUROPEAN PATENT SPECIFICATION

(11) **EP 2 153 724 B1**
(45) Date of publication and mention of the grant of the patent: **10.11.2010**
(21) Application number: 09164337.9
(22) Date of filing: 01.07.2009
(51) Int. Cl.: A21D 2/18, A21D 13/06

(54) **Gluten-Free Dough Composition**
Glutenfreie Teigzusammensetzung
Composition de pâte sans gluten

(30) Priority: 23.07.2008 JP 2008189803
(43) Date of publication of application: 17.02.2010
(73) Proprietor: Shin-Etsu Chemical Co., Ltd., Tokyo (JP)
(72) Inventor: FUKASAWA, Miyuki, Chiyoda-ku Tokyo (JP); HAYAKAWA, Kazuhisa, Joestsu-shi Niigata (JP)
(74) Representative: Jones, Helen M.M.

(56) References cited:
- EP-A1- 1 561 380
- FR-A1- 2 765 076
- US-A1- 2006 088 647
- NISHITA K D ET AL: "DEVELOPMENT OF A YEAST-LEAVENED RICE-BREAD FORMULA" CEREAL CHEMISTRY, AMERICAN ASSOCIATION OF CEREAL CHEMISTS. MINNEAPOLIS, US, vol. 53, no. 5, 1 January 1976 (1976-01-01), pages 626-635, XP000889633 ISSN: 0009-0352
- HAQUE A ET AL: "Polysaccharide substitutes for gluten in non-wheat bread" CARBOHYDRATE POLYMERS, APPLIED SCIENCE PUBLISHERS, LTD. BARKING, GB, vol. 25, no. 4, 1 January 1994 (1994-01-01), pages 337-344, XP002331479 ISSN: 0144-8617
- ANONYMOUS: "Methylcellulose in low gluten bread" RESEARCH DISCLOSURE, MASON PUBLICATIONS, HAMPSHIRE, GB, vol. 259, no. 23, 1 November 1985 (1985-11-01), XP007110240 ISSN: 0374-4353

## Description

### BACKGROUND OF THE INVENTION

### 1. Field of the Invention

The present invention relates to dough compositions to be used for producing bread, cakes, noodles and the like that even patients having an allergy to food such as wheat can eat.

### 2. Description of the related art

The number of allergic patients to a variety of allergens has rapidly increased in these days. This is attributed to large consumption of protein due to westernization of eating habit and complex combinations of various other factors that convert numerous substances existing in the living environment to allergens.

Food allergies to cereals such as wheat have also increased rapidly. In order to avoid food allergies, it is attempted to restrict or prohibit the ingestion of the relevant food item. However, the ingestion of processed foods serving as the staple diet like bread, noodles and cakes cannot be restricted or prohibited easily.

In general, it is very difficult to make bread using gluten-free cereal flours such as rice flour and buckwheat flour. For example, upon leavening of dough with yeast in bread making, since the dough using a wheat flour or rye flour contains gluten (a composite protein of gliadin and glutenin), a carbon dioxide gas generated by leavening is trapped by this gluten and expands the gluten network so that the dough rises. The dough using a gluten-free cereal flour does not trap therein the carbon dioxide gas generated by leavening so that the dough does not efficiently rise. For example, in noodle making, raw materials are combined into a mass by making use of the viscosity of gluten. On the other hand, noodles cannot be made from dough using a gluten-free cereal flour, because due to lack of adhesion, the raw materials cannot be combined into a mass.

Then, as one approach of making bread using a gluten-free cereal flour, there is disclosed a method of adding gluten extracted from a wheat flour to a gluten-free cereal flour to make the bread voluminous (JP 2003-304801A). Wheat allergic patients, however, cannot eat this bread because the gluten contains a protein acting as an allergen.

It is also known to make bread by using the gluten or wheat flour which has been subjected to a special treatment for removing a protein acting as an allergen therefrom (JP 2003-169593A). Since the protein acting as an allergen is not always removed in its entirety, those patients having a strong allergic response cannot eat such bread.

As a method of making bread for allergic patients without using a wheat flour or gluten extracted therefrom, there is known a method of using water-soluble cellulose ether and isagol (or psyllium) to make the bread voluminous (Carbohydr. Poly., 25, 337-344(1994)). There is also known a method of adding water-soluble polysaccharides such as guar gum and xanthan gum for the same purpose (Cereal Chemistry, 53(5), 626-635(1976)).

On the other hand, there is disclosed a method of making gluten-free bread by specifying a viscoelasticity value of bread dough produced by adding an optional subsidiary raw material to a mixture of rice flour, yeast, and water used as a main raw material (JP 2003-189786A). In addition, there are also disclosed a method of making a gluten-free and bubble-containing cereal food by stabilizing the bubbles generated by yeast in the presence of a water-soluble dietary fiber (Japanese Patent No. 3902782) and a method of making a gluten-free and bubble-containing cereal food by stabilizing the bubbles generated by baking powder in the presence of a water-soluble dietary fiber (Japanese Patent No. 3902787). According to these documents, gluten-free and bubble-containing bread can be made by controlling the viscoelasticity of bread dough within a specified range.

However, control of the viscoelasticity of bread dough to a specified value in these methods requires fine control of the amount of water and therefore bread containing desirably uniform bubbles therein cannot be made stably.

Further, none of the above JP 2003-189786A and Japanese Patent Nos. 3902782 and 3902787 includes specific examples of subsidiary raw materials or dietary fiber to be added for making bread dough having a specific viscoelasticity. Addition of water-soluble cellulose ether or isagol (or psyllium) as described in Carbohydr. Poly., 25, 337-344(1994) or a water-soluble polysaccharide such as guar gum or xanthan gum as described in Cereal Chemistry, 53(5), 626-635(1976) or control of the amount of water is only possible means of preparing such bread dough.

The bread made by using isagol or water-soluble polysaccharide has a certain volume, but has a hard crust (dark brown outer portion of the bread) and has therefore a deteriorated texture. When the water-soluble polysaccharide is added, the crumb (white inner portion of the bread) of the resulting bread becomes elastic and provides a gummy texture. When a dietary fiber like isagol is added, the crumb becomes very soft and loses elasticity so that the texture of the resulting bread becomes far different from so-called texture of bread.

Since there are isagol allergy cases and isagol has no satisfactory safety data, there is a demand for substitute additives for isagol.

USP 5,492,712 proposes gluten-free pasta by using a gluten-free flour and as a thickener, guar gum or xanthan gum. When boiled, however, the pasta is broken into pieces because of a reduction in the viscoelasticity of the thickener.

On the other hand, for the purposes of expanding new consumption of rice, increasing the domestic food supply, and solving the future food shortage, it has been required to establish a method of making bread using a rice flour. There is a demand for the development of a method of making bread using a rice flour or a gluten-free cereal flour, also for those other than wheat allergic patients, thinking that bread made by using a cereal flour other than wheat flour (e.g., bread made of rice flour) is moist, is smooth on the throat, and provides a unique texture different from conventional bread.

Under such situations, there is disclosed a dough composition comprising a water-soluble cellulose ether and a low-substituted cellulose ether having a molar substitution of from 0.05 to 1.0 (JP 2005-218410A), which facilitates making of bubble-containing bread having an improved texture. However, even this method is unsatisfactory because bubbles contained in the bread produced by this method vary in size and only bread containing bubbles having a diameter of 1 cm or greater can be obtained. In addition to these problems, the low-substituted hydroxypropyl cellulose described in JP 2005-218410A is not approved as a food additive at present. It is therefore impossible to eat foods made by using the low-substituted hydroxypropyl cellulose in practice.

### SUMMARY OF THE INVENTION

With the foregoing in view, the invention has been made. An object of the invention is to provide a method of making bread having a satisfactory volume and texture, being eatable even by patients having an allergy to food such as wheat, and having uniform bubbles without adding isagol or a water soluble polysaccharide for making the bread voluminous.

With a view to attaining the above object, the present inventors have carried out an intensive investigation. As a result, it has been found that bread or cake which contains uniform bubbles, has an adequate volume, is excellent in texture, and can be eaten by patients having an allergy to food such as wheat, can be made by forming, into a desired shape, a gluten-free dough composition containing bubbles formed by using yeast or baking powder, while pasta having good texture and stable in shape even boiled can be made by forming a gluten-free dough composition into a desired shape. The gluten-free dough composition comprises at least water-soluble hydroxypropyl methylcellulose having a hydroxypropoxyl molar substitution of from 0.05 to 0.3 and a degree of methoxyl substitution of from 1.4 to 1.9, wherein the hydroxypropoxyl groups can be classified into substituted hydroxypropoxyl groups having hydroxyl groups of the hydroxypropoxyl groups substituted further with methoxyl groups and unsubstituted hydroxypropoxyl groups having hydroxyl groups of the hydroxypropoxyl groups unsubstituted, and a ratio (A/B) of a molar fraction (A) of the substituted hydroxypropoxyl groups to a molar fraction (B) of the unsubstituted hydroxypropoxyl groups is 0.4 or greater; a gluten-free cereal flour; and water, leading to the completion of the invention.

The invention provides a dough composition comprising at least
water-soluble hydroxypropyl methylcellulose having a hydroxypropoxyl molar substitution of from 0.05 to 0.3 and a degree of methoxyl substitution of from 1.4 to 1.9, wherein hydroxypropoxyl groups are classified into substituted hydroxypropoxyl groups having hydroxyl groups of the hydroxypropoxy groups substituted further with methoxyl groups and unsubstituted hydroxypropoxyl groups having hydroxyl groups of the hydroxypropoxyl groups unsubstituted, and a ratio (A/B) of a molar fraction (A) of the substituted hydroxypropoxyl groups to a molar fraction (B) of the unsubstituted hydroxypropoxyl groups is 0.4 or greater;
a gluten-free cereal flour; and
water.

In an embodiment the dough comprises a leavening agent, such as yeast.

Although the bread, noodles or cakes produced by the dough composition of the invention use only a gluten-free cereal flour, bread or cakes do not cause caving, provide excellent texture, are voluminous as excellent as conventional bread baked by using a wheat flour, have uniform bubbles, and provide soft texture even after baking, while noodles are stable even boiled and provide good texture. In addition, they can be eaten even by patients having an allergy to food such as wheat.

The invention further provides a cooking method in which the new dough is cooked, usually by baking, as well as the cooked products.

Examples of a gluten-free cereal flour used in the invention may include rice flours (such as non-glutinous rice flour (Joshin-ko), brown rice (unpolished rice, Gen-Mai) flour, and sweet rice (Mochi-gome) flour), buckwheat flour, proso millet flour, foxtail millet flour, amaranth flour, potato flour, and starches such as rice starch, wheat starch, corn starch and potato starch. They may be used singly or in combination. Edible salt, sugar, oils, fats, emulsifiers, flavors and the like may be optionally added.

Hydroxypropyl methylcellulose to be used in the invention is one of water-soluble cellulose ether and is approved for application to common food in Notification No. 26 of the Ministry of Health, Labour and Welfare dated on February 27, 2007 and Director Notice No. 022701 of the Department of Food Safety. In hydroxypropyl methylcellulose obtained by ether-substitution of methyl groups and hydroxypropoxyl groups on cellulose, methoxyl groups are localized intramolecularly relative to the cellulose chain. Hydroxypropyl methylcellulose has therefore a "thermoreversible gelation property". Described specifically, when an aqueous solution of hydroxypropyl methylcellulose is heated, hydrophobic hydration of a methoxyl group portion localized in the molecule occurs and the solution turns into a hydrous gel. When the resulting gel is cooled, on the other hand, hydrophobic hydration decreases, whereby the gel returns to the original aqueous solution. Because of such a thermoreversible gelation property, the aqueous solution shows excellent shape retention even when heated. This means that bubbles generated in bread dough to which the hydroxypropyl methylcellulose has been added exhibit shape retention by the gelation caused upon heating of the dough, facilitating suppression of generation of large bubbles which will otherwise occur by the expansion of bubbles by heating.

On the other hand, methyl cellulose having no hydroxypropoxyl group is excellent in this thermoreversible gelation performance. When the thermoreversible gelation property is determined as a strength of a thermoreversible gel found by inserting a columnar rod having a diameter of 15 mm by 2 cm at a rate of 5 cm/min into a gel obtained by thermoreversible gelation 15 minutes after a 2.5% by weight aqueous solution is placed in a temperature-controlled water tank of 80°C and dividing the maximum load (G) imposed on the columnar rod by the cross-sectional area of the inserted rod, it is as high as from 500 to 700 g/cm², revealing that the hydroxypropoxyl-free methyl cellulose exhibits excellent shape retention in bread dough.

However, the methyl cellulose having such a high thermoreversible gel strength has poor water solubility. Although solubility in water can be improved by decreasing the temperature of water to 10°C or less, the methyl cellulose does not show solubility at from 20 to 30°C set as a typical preparation temperature of dough and moreover, it does not exhibit the original thermoreversible gelation performance. Methyl cellulose having a hydroxypropoxyl group introduced therein, on the other hand, has solubility at a temperature of from 20 to 30° or greater.

When a hydroxypropoxyl group is introduced into methyl cellulose at a molar substitution exceeding 0.1, the thermoreversible gel strength typically decreases to 100 g/cm² or less. For example, hydroxypropyl methylcellulose having a hydroxypropoxyl group introduced therein at a molar substitution of 0.15 and having a degree of methoxyl substitution of 1.8 has a thermoreversible gel strength of 30 g/cm². This means that use of methyl cellulose having no hydroxypropoxyl group introduced therein is desired when a high thermoreversible gel strength is required. In order to dissolve methyl cellulose having no hydroxypropoxyl group introduced therein in water, however, water temperature should be controlled to 10°C or less, which may cause a problem. The problem is that the methyl cellulose cannot exhibit its inherent thermoreversible gel strength unless it is dissolved.

The hydroxypropyl methylcellulose to be used in the invention is therefore required to easily dissolve in water without reducing the temperature to 10°C or less and have enhanced thermoreversible gel strength when the solution thus prepared is heated.

More specifically, the hydroxypropyl methylcellulose to be used in the invention is water-soluble hydroxypropyl methylcellulose having a hydroxypropoxyl molar substitution of 0.05 to 0.3, preferably 0.05 to 0.1 in view of attaining higher thermoreversible gel strength, and a degree of methoxyl substitution of 1.4 to 1.9, wherein the hydroxypropoxyl groups can be classified into substituted hydroxypropoxyl groups having hydroxyl groups of the hydroxypropoxyl groups substituted further with methoxyl groups and unsubstituted hydroxypropoxyl groups having hydroxyl groups of the hydroxypropoxyl groups unsubstituted and a ratio (A/B) of a molar fraction (A) of the substituted hydroxypropoxyl groups to a molar fraction (B) of the unsubstituted hydroxypropoxyl groups is 0.4 or greater.

A method of preparing hydroxypropyl methylcellulose comprises steps of reacting cellulose and an alkali to obtain alkali cellulose and reacting the alkali cellulose with a hydroxypropyl etherifying agent and a methyl etherifying agent to obtain water-soluble hydroxypropyl methylcellulose having a hydroxypropoxyl molar substitution of from 0.05 to 0.3 and a degree of methoxyl substitution of from 1.4 to 1.9, wherein the hydroxypropoxyl groups are classified into substituted hydroxypropoxyl groups having hydroxyl groups of the hydroxypropoxyl groups substituted further with methoxyl groups and unsubstituted hydroxypropoxyl groups having hydroxyl groups of the hydroxypropoxyl groups unsubstituted and a ratio (A/B) of a molar fraction (A) of the substituted hydroxypropoxyl groups to a molar fraction (B) of the unsubstituted hydroxypropoxyl groups is 0.4 or greater. The step of reacting the alkali cellulose with a hydroxypropyl etherifying agent and a methyl etherifying agent to obtain the water soluble hydroxypropyl methylcellulose comprises a stage of adding the hydroxypropyl etherifying agent, and a stage of adding the methyl etherifying agent after the reaction between the hydroxypropyl etherifying agent and the alkali cellulose, or adding the methyl etherifying agent such that 40% by weight or greater of a stoichiometric amount of the methyl etherifying agent remains unreacted at the time when a reaction of 60% by weight or greater of a stoichiometric amount of the hydroxypropyl etherifying agent has been completed. The water-soluble hydroxypropyl methylcellulose produced through these specific reaction steps can be used in the invention.

The details of the invention will hereinafter be described more specifically.

Although no particular limitation is imposed on the water-soluble hydroxypropyl methylcellulose usable in the invention and having a hydroxypropoxyl molar substitution of from 0.05 to 0.3 and a degree of methoxyl substitution of from 1.4 to 1.9, it may be prepared by impregnating cellulose with a predetermined amount of an aqueous alkali solution and then reacting with necessary amounts of a methyl etherifying agent (preferably, methyl chloride) and a hydroxyalkyl etherifying agent (preferably, propylene oxide).

The term "hydroxypropoxyl molar substitution" as used herein means the average molar number of hydroxypropoxyl groups added per glucose ring unit of cellulose, while the term "degree of methoxyl substitution" means the average number of hydroxyl groups substituted with methoxyl groups per glucose ring unit of cellulose.

In order to adjust a ratio (A/B) of a molar fraction (A) of the substituted hydroxypropoxyl groups having hydroxyl groups of the hydroxypropoxyl groups substituted further with methoxyl groups to a molar fraction (B) of the hydroxypropoxyl groups having hydroxyl groups of the hydroxypropoxyl groups not substituted further with methoxyl groups to 0.4 or greater, the adding order or adding rate of the etherifying agents is controlled so that the substitution with methoxyl groups will follow the substitution of a major portion of hydroxypropoxyl groups.

More specifically, after preparation of alkali cellulose by reacting cellulose with a necessary amount of an alkali (preferably, a solution of sodium hydroxide), a hydroxypropyl etherifying agent (for example, propylene oxide) may be added to the alkali cellulose to cause etherification reaction, preferably at from 50 to 95°C. Then, a methyl etherifying agent (for example, methyl chloride) may be added to cause a corresponding reaction.

Alternatively, the water-soluble hydroxypropyl methylcellulose may be prepared by adding a hydroxypropyl etherifying agent (for example, propylene oxide) to the alkali cellulose and by adding a hydroxypropyl etherifying agent (for example, propylene oxide) and a methyl etherifying agent (for example, methyl chloride) successively or appropriately so as not to complete the reaction of 40% by weight or greater, more preferably 50% by weight or greater, still more preferably 60% by weight or greater of a stoichiometric amount of methyl chloride at the time point when the reaction of 60% by weight or greater, more preferably 70% by weight or greater, still more preferably 80% or greater of a stoichiometric amount of the hydroxypropyl etherifying agent added is completed. More specifically, the hydroxypropyl etherifying agent and the methyl etherifying agent may be added simultaneously or successively in any order and a ratio of the adding time of the methyl etherifying agent to the adding time of the hydroxypropyl etherifying agent may fall within a range of preferably from 1.3 to 3, especially preferably from 1.5 to 3.

The hydroxypropoxyl molar substitution and degree of methoxyl substitution in the invention can be measured in accordance with the analysis method of the degree of substitution of hypromellose (hydroxypropyl methylcellulose) as described in the Japanese Pharmacopoeia, Fifteenth Edition or "Standard Method of Testing HYDROXYPROPYL METHYLCELLULOSE" specified in ASTM D-2363-72/USA. The molar substitution and the degree of substitution can also be analyzed by NMR or infrared absorption analysis.

When substitution of methoxyl groups follows substitution of hydroxypropoxyl groups, the hydroxyl groups of these hydroxypropoxyl groups can be substituted further with methoxyl groups. When the hydroxyl groups of the cellulose are substituted with methoxyl groups, however, further substitution of hydroxypropoxyl groups does not occur at the substitution site of methoxyl groups because the methoxyl groups have no hydroxyl groups.

When total moles of the methoxyl groups, unsubstituted hydroxypropoxyl groups, substituted hydroxypropoxyl groups, and substituents (OH) substituted with neither methoxyl groups nor hydroxypropoxyl groups can be determined and a molar substitution of the substituted hydroxypropyl groups having hydroxyl groups of the hydroxypropoxyl groups substituted further with methoxyl groups can be determined separately, a substitution molar fraction of the substituted hydroxypropoxyl groups can be calculated by dividing the molar substitution of the substituted hydroxypropoxyl groups by the above total moles.

If the molar substitution of unsubstituted hydroxypropoxyl groups having hydroxyl groups of the hydroxypropoxyl groups not substituted with methoxyl groups can be determined, a substitution molar fraction of the unsubstituted hydroxypropoxyl groups can be calculated by dividing the molar substitution of the unsubstituted hydroxypropoxyl groups by the total moles.

The method for analyzing whether a water-soluble hydroxypropyl methylcellulose has a ratio (A/B) of 0.4 or greater wherein (A) is a molar fraction of the substituted hydroxypropoxyl groups having hydroxyl groups of the hydroxyprpoxyl groups substituted further with methoxyl groups and (B) is a molar fraction of the unsubstituted hydroxypropoxyl groups having hydroxyl groups of the hydroxyprpoxyl groups not substituted further with methoxyl groups may include a method as described in Macromolecules, 20, 2413(1987) or Journal of Society of Textile and Cellulose Industry Japan, 40, T-504(1984). The method as described therein comprises steps of hydrolyzing cellulose ether in sulfuric acid, neutralizing, filtrating, purifying, acetylating the purified product, subjecting the acetylated product to ¹³C-NMR, liquid chromatography and gas chromatography, and determining based on the characteristics of each detection graph identified by using a mass analyzer.

A weight average polymerization degree of the hydroxypropyl methylcellulose thus obtained can be determined by measuring a weight average molecular weight by using a combination of gel permeation chromatography and a light scattering method in accordance with a molecular weight measuring method as described in Journal of Polymer Science and Technology, 39(4), 293-298(1982) and dividing the weight average molecular weight by a molecular weight per unit hydroxypropyl methylcellulose molecule. The kind or condition of the solvent, temperature, column, or wavelength of the light scattering apparatus employed in the measurement of the weight average molecular weight are not limited to those described in the Journal of Polymer Science and Technology but can be selected appropriately. The weight average molecular weight can also be determined by ultracentrifugation or conversion from a viscosity average molecular weight.

Hydroxypropyl methylcellulose having a higher weight average polymerization degree tends to exhibit higher thermoreversible gel strength when the concentration of its aqueous solution is set equal. Even hydroxypropyl methylcellulose having a low weight average polymerization degree can have necessary strength by adjusting the concentration of its aqueous solution. When it is used as a binder, its weight average polymerization degree may be desirably from 100 to 10000, which can provide high thermoreversible gel strength even if its addition amount is small. When the weight average polymerization degree is lower than 100, sufficient thermoreversible gel strength suited for use as an additive may not be attained and an amount to be added may be as large as more than 10% by weight. When the weight average polymerization degree is higher than 10000, raw material cellulose having a specific polymerization degree should be selected or prepared, which may make preparation of the hydroxypropyl methylcellulose difficult.

The cellulose (pulp) to be used for the preparation of the hydroxypropyl methylcellulose of the invention may include wood pulp obtained by refining the wood, and cotton pulp (linter pulp) obtained from cotton fibers.

The dissolution temperature of the hydroxypropyl methylcellulose is measured by placing hydroxypropyl methylcellulose powder and hot water in a 300-mL beaker to prepare a 1% by weight aqueous solution of the hydroxypropyl methylcellulose produced, cooling the resulting solution while stirring at 400 rpm, measuring viscosities of the aqueous solution at predetermined temperatures of the aqueous solution, and measuring, as the dissolution temperature, the temperature at which the slope of a line connecting the plotted viscosities against temperatures starts to blunt.

The thermoreversible gel strength is determined by preparing a 2% by weight aqueous solution of the hydroxypropyl methylcellulose produced, placing it in a 50-mL beaker, causing thermoreversible gelation in a bath of 80°C for 30 minutes, measuring, with a rheometer manufactured by Rheotec, the maximum force applied to a columnar rod having a diameter of 15 mm when 2 cm of the columnar rod is inserted from an upper part of the gel into the gel at a rate of 5 cm/min, and calculating the thermoreversible gel strength by dividing the maximum force by a cross-sectional area of the columnar rod.

The hydroxypropyl methylcellulose to be used in the invention may be added in an amount of preferably from 0.1 to 3.0 parts by weight, more preferably from 0.5 to 2.0 parts by weight based on 100 parts by weight of the gluten-free cereal flour. When the amount of the hydroxypropyl methylcellulose is less than 0.1 parts by weight, the advantage of the invention may not be recognized. When the amount is more than 3.0 parts by weight, the extension of bread dough may be deteriorated and the necessary amount of water may increase excessively, which may provide not a desired texture but a hard texture.

Water to be comprised by the dough composition of the invention may be added, for example, when bread dough is prepared. It may be added in an amount of from 60 to 180 parts by weight, more preferably from 90 to 150 parts by weight based on 100 parts by weight of the gluten-free cereal flour. When the amount of water is less than 60 parts by weight, the resulting dough composition may become hard and may prevent satisfactory rise of bread. When it is more than 180 parts by weight, bread may rise excessively to cause caving or make a large hole inside the bread. As a result, the bread may be poor in both appearance and texture.

Gluten-free bread, noodles, or cakes can be made in a conventional manner, for example, by molding or casting a dough composition obtained by mixing a cereal flour, yeast/baking powder, water, water-soluble cellulose ether such as methyl cellulose or hydroxypropyl cellulose, low-substituted cellulose ether, salt, sugar, oil or fat, and polysaccharide such as cellulose powder, xanthan gum, guar gum, tamarind gum, locust bean gum, carrageenan, agar, gelatin, pectin or α-starch, an optional emulsifying agent, and an optional flavor; leavening the resulting composition; and then baking.

In the invention, a polysaccharide can be optionally added. Specific examples of the polysaccharide may include carboxymethyl cellulose, methyl cellulose, powder cellulose, xanthan gum, guar gum, tamarind gum, carrageenan, agar, gelatin, pectin and α-starch. Of these, xanthan gum and guar gum may be especially preferred. The polysaccharide may be added in an amount of preferably from 0.1 to 5.0 parts by weight, more preferably from 0.5 to 2.0 parts by weight based on 100 parts by weight of the gluten-free cereal flour.

Commercially available raw materials such as cereal flour, salt, sugar, and oil or fat may be used for preparation of the dough composition, but the raw materials suited for food allergic patients may be preferable.

### EXAMPLES

The invention will hereinafter be described specifically by Examples and Comparative Examples. It should not be construed that the invention is limited to or by Examples.

### Example 1

### <Preparation of hydroxypropyl methylcellulose>

Wood-derived high-purity dissolution pulp manufactured by Nippon Paper Industries Co., Ltd. was ground in a roller mill, sifted through a sieve having openings of 600 µm, and fed at a constant rate of 10 g/min to a twin-screw kneader "S1 KRC Kneader" (trade name; product by Kurimoto, Ltd., having a paddle diameter of 25 mm, an outer diameter of 255 mm, L/D=10.2, an inner volume of 0.12 liter and a rotation speed of 100 rpm). At the same time, a 49% by weight sodium hydroxide solution was fed at a constant rate of 21.5 g/min from an inlet provided at a pulp feed port so as to add the aqueous alkali solution to the cellulose. In such a manner, alkali cellulose was obtained.

Of the alkali cellulose obtained by continuous operation for about 30 minutes, a 585.0 g portion was placed in an autoclave equipped with a Ploughshare type internal agitating blade. After the pressure was reduced to -97 kPa, nitrogen was enclosed in the autoclave to raise the pressure back to an atmospheric pressure. The pressure was then reduced again to -97 kPa. Propylene oxide (20 g) and methyl chloride (253.9 g) were added via pressure pumps while setting a ratio of addition time of methyl chloride to addition time of propylene oxide at 3 (addition time of methyl chloride: 60 minutes, addition time of propylene oxide: 20 minutes) and finishing the addition of propylene oxide prior to the addition of methyl chloride. They were reacted for 2 hours at an internal temperature adjusted to 60°C. The temperature was then raised to 90°C over 30 minutes and kept at 90°C for 30 minutes, whereby an etherification reaction was completed.

The reaction product was washed with hot water of 85°C or greater and dried in a small Willey mill. It was analyzed in accordance with the analysis method for the degree of substitution of hypromellose (hydroxypropyl methylcellulose) described in the Japanese Pharmacopoeia, Fifteenth Edition. As a result of the analysis, the hydroxypropyl methylcellulose thus obtained had a hydroxypropoxyl molar substitution of 0.07 and a degree of methoxyl substitution of 1.8.

The molecular weight of the hydroxypropyl methylcellulose thus obtained was determined in accordance with the molecular weight measuring method as described in Japanese Journal of Polymer Science and Technology, 39(4), 293-298(1982). As a result of calculation, the weight average polymerization degree was 1200.

After addition of 2 ml of a 3% by weight aqueous sulfuric acid solution to 50 mg of the resulting hydroxypropyl methylcellulose and hydrolysis of the resulting mixture at 140°C for 3 hours, the hydrolysate was neutralized with about 0.7 g of barium carbonate. To the neutralized hydrolysate was added 3 ml of methanol to dissolve and disperse the former in the latter, and the resulting solution was then centrifuged at 500 G. The supernatant was filtered through a filter having openings of 0.45 µm. Reduction of the glucose ring was performed at 37 to 38°C for 1 hour by adding 120 µl of a solution obtained by dissolving 1.5 g of NaBH₄ in 10 ml of a 0.2N aqueous NaOH solution. After addition of 100 µl of acetic acid thereto, the solvent was removed by evaporation and the residue was dried. By adding 2 ml of pyridine and 1 ml of acetic anhydride, acetylation was carried out at 120°C for 3 hours. After centrifugation at 500 G, the supernatant was filtered through a filter having openings of 0.45 µm. The solvent was then removed again and the residue was re-dissolved in 1 ml of diethylene glycol dimethyl ether. The resulting solution (1 µl) was passed through "DB-5 Column" (trade name; product of J&W) heated to 150 to 220°C and a retention time of each decomposed component was measured using an FID detector.

Based on a ratio of areas of the peaks at which the structures of decomposed components had been identified in advance by a mass analyzer, a ratio (A/B) was determined to be 0.8, wherein (A) represents a molar fraction of substituted hydroxypropoxyl groups having hydroxyl groups of the hydroxypropoxyl groups substituted further with methoxyl groups and (B) represents a molar fraction of unsubstituted hydroxypropoxyl groups having hydroxyl groups of the hydroxypropoxyl groups not substituted further with methoxyl groups.

A dissolution temperature was determined by placing the hydroxypropyl methylcellulose powder and hot water in a 300-ml beaker in order to prepare a 1% by weight aqueous solution of the hydroxypropyl methylcellulose, cooling the resulting solution at a rate of 2°C over 10 minutes while stirring at 400 rpm, measuring the viscosities of the aqueous solution relative to the temperatures of the aqueous solution, and measuring the dissolution temperature at which the slope of a line connecting the viscosities plotted against the temperature started to blunt. As a result, the dissolution temperature was 25°C.

After preparation of a 2% by weight aqueous solution of the resulting hydroxypropyl methylcellulose, the aqueous solution was placed in a 50-ml beaker. Thermoreversible gelation of the aqueous solution was then conducted for 30 minutes in a bath of 80°C. Thermoreversible gel strength was determined by measuring, with a rheometer manufactured by Rheotec, a force applied to a columnar rod having a diameter of 15 mm when the rod was inserted downward into the gel by 2 cm at a rate of 5 cm/min, and dividing the force value by the cross-sectional area of the rod. As a result, the thermoreversible gel strength was 150 g/cm².

A dough composition was obtained by stirring 50 parts by weight of non-glutinous rice flour (Joshin-ko), 50 parts by weight of corn starch, 2 parts by weight of salt, 10 parts by weight of sugar, 3 parts by weight of instant dry yeast, 10 parts by weight of shortening, 1 part by weight of the hydroxypropyl methylcellulose prepared in the above manner, and 85 parts by weight of water until the composition became uniform. The resulting dough composition was leavened at 28°C for 20 minutes. The leavened dough composition was then degassed, shaped and placed in a pan for 50 mm x 100 mm, followed by leavening at 35°C for 20 minutes to put air cells in the dough composition. The resulting dough composition was baked at 210°C for about 20 seconds to make bread.

Based on observation of the cross-sectional surface of bread sliced into halves, the bread had uniform air cells, was expanded well and provided a soft texture. Naked eye observation of the bubbles in the bread, and the hardness of the crumb and crust portions two hours after baking where the hardness are shown in Table 2. The hardness is a maximum stress as measured using a rheometer (product of Fudo Kogyo). The stress on the crumb portion (softer portion inside of the bread) was measured by slicing the bread into 3-cm thick portion just before measurement, penetrating a circular disk having a diameter of 2 cm into the 3-cm thick portion at a rate of 2 cm/min, and measuring the pressure applied onto the disk when the disk is penetrated by 1 cm. The stress on the crust (the skin portion of the bread) was measured by slicing the bread into a portion having a height of 3 cm and including the crust portion, penetrating a rod-like disk having a diameter of 2 mm into the portion at a rate of 2 cm/min and measuring the stress when the disk broke through the skin portion of the sample.

### Examples 2 to 7 and Comparative Examples 1 to 3

In each of Examples 2 to 7 and Comparative Examples 1 to 3, hydroxypropyl methylcellulose was prepared in the same manner as in Example 1 except that the kind of the pulp, amounts of methyl chloride and propylene oxide, and an ratio of (addition time of methyl chloride)/(addition time of propylene oxide) were changed as shown in Table 1. A degree of methoxyl substitution, a hydroxypropoxyl molar substitution, a ratio (A/B) of a molar fraction (A) of the substituted hydroxypropoxyl groups having hydroxyl groups of the hydroxypropoxyl groups substituted further with methoxyl groups to a molar fraction (B) of the unsubstituted hydroxypropoxyl groups having hydroxyl groups of the hydroxypropoxyl groups unsubstituted further with methoxyl groups, weight average polymerization degree, dissolution temperature, and thermoreversible gel strength of the resulting hydroxypropyl methylcellulose were measured in the same manner as in Example 1 and are shown in each of Examples and Comparative Examples in Table 1.

As in Example 1, cereal bread was made experimentally by using the hydroxypropyl methylcellulose obtained above, cellulose powder, polysaccharide, salt, sugar, yeast, and shortening. Naked eye observation of bubbles in the bread and hardness measurement of the crumb and crust portions of the bread two hours after baking by using the rheometer were carried out the same manner as in Example 1. The results are shown in Table 2.

With regard to the hardness of the crumb portion two hours after baking, the higher the hardness stress becomes, the harder the bread becomes. It is evident in Table 2 that the crumb portion of the bread obtained in each of Examples is soft, while that in each of Comparative Examples is hard. Most of the bubbles in the bread obtained in Examples have a diameter not greater than 5 mm. In Comparative Examples, on the other hand, many bubbles in the bread had a diameter of 10 mm or greater and the bread was inferior in both appearance and texture with excessive rise, caving or large holes therein.

### Example 8 and Comparative Examples 4 and 5

In Example 8 and Comparative Examples 4 and 5, hydroxypropyl methylcellulose, xanthan gum (product of Sansho Co., Ltd.), and guar gum (product of Sansho Co., Ltd.) were used, respectively, as an additive and bread was made in the same manner as in Example 1. Results of Naked eye observation and evaluation of hardness and texture are shown in Table 3.

It is evident in Table 3 that breads made using only xanthan gum and guar gum, respectively, were less voluminous and provided a harder texture than the bread made in Example 1.

**Table 1**

| | pulp | methyl chloride (MC) | propylene oxide (P0) | ratio of MC addition time/ P0 addition time | degree of methoxyl substitution | hydroxypropoxyl molar sustitution | A/B ^{*1} | weight average polymer. degree | dissolution temperature | thermo-reversible gel strength |
|---|---|---|---|---|---|---|---|---|---|---|
| | | (g) | (g) | | | | | | (°C) | (g/cm²) |
| Example 1 | wood pulp | 254 | 20 | 3 | 1. 8 | 0. 07 | 0. 8 | 1200 | 25 | 150 |
| Example 2 | cotton pulp | 200 | 18 | 2. 8 | 1. 6 | 0. 05 | 0. 7 | 10000 | 20 | 200 |
| Example 3 | wood pulp | 206. 9 | 40 | 1. 5 | 1. 9 | 0. 07 | 0. 6 | 500 | 27 | 120 |
| Example 4 | wood pulp | 220 | 20 | 1. 3 | 1. 7 | 0. 7 | 0. 4 | 1200 | 20 | 100 |
| Example 5 | wood pulp | 220 | 80 | 3 | 1. 4 | 0. 3 | 0. 4 | 1200 | 43 | 70 |
| Example 6 | wood pulp | 250. 6 | 80 | 2 | 1. 7 | 0. 25 | 0. 5 | 1200 | 43 | 40 |
| Example 7 | wood pulp | 300. 6 | 100 | 3 | 1. 9 | 0. 3 | 0. 6 | 1200 | 43 | 90 |
| Comp. Ex. 1 | wood pulp | 256 | 16 | 1 | 1. 8 | 0. 15 | 0. 3 | 1100 | 37 | 15 |
| Comp. Ex. 2 | wood pulp | 256 | 27 | 1. 2 | 1. 7 | 0. 25 | 0. 2 | 1100 | 45 | 8 |
| Comp. Ex. 3 | wood pulp | 256 | 2 | 1. 5 | 1. 6 | 0. 02 | 0. 3 | 1300 | 16 | 14 |

| | | | | | | | | | | |
|---|---|---|---|---|---|---|---|---|---|---|
| *1 A ratio (A/B) of a molar fraction (A) of the substituted hydroxypropoxyl groups having hydroxyl groups of the hydroxypropoxyl groups substituted further with methoxyl groups to a molar fraction (B) of the unsubstituted hydroxypropoxyl groups having hydroxyl groups of the hydroxypropoxyl groups unsubstituted further with methoxyl groups. | | | | | | | | | | |

**Table 2**

| | ingredients | | | | | | | bread prepared | | | |
|---|---|---|---|---|---|---|---|---|---|---|---|
| | water-soluble hydroxypropyl methyl cellulose | gluten-free cereal flour | | instant dry yeast | the other additive | water | subsidiary raw material *4 | bubbles | | 2 hours after baking | |
| | | rice Joshin-ko | corn starch | | | | | diameter ≧10mm | diameter ≦5mm | hardness of crust portion | hardness of crumb portion |
| | (parts by weight: pbw) | (pbw) | (pbw) | (pbw) | (pbw) | (pbw) | (pbw) | (%) | (%) | (g) | (g) |
| Example 1 | 1 | 50 | 50 | 3 | 0 | 85 | 22 | 0 | 100 | 280 | 120 |
| Example 2 | 0. 1 | 50 | 50 | 0. 5 | 0 | 80 | 22 | 10 | 90 | 250 | 100 |
| Example 3 | 3 | 50 | 50 | 10 | 0 | 120 | 22 | 0 | 100 | 300 | 145 |
| Example 4 | 1 | 50 | 48 | 3 | 2 *1 | 90 | 22 | 0 | 100 | 250 | 118 |
| Example 5 | 1 | 50 | 48. 5 | 3 | 1.5 ‡2 | 100 | 22 | 0 | 100 | 280 | 120 |
| Example 6 | 1 | 50 | 48. 5 | 3 | 1.5 ‡3 | 100 | 22 | 0 | 100 | 300 | 120 |
| Example 7 | 0. 05 | 50 | 50 | 3 | 0 | 100 | 22 | 20 | 80 | 250 | 95 |
| Comp. Ex. 1 | 3 | 50 | 50 | 10 | 0 | 120 | 22 | 60 | 40 | 425 | 165 |
| Comp. Ex. 2 | 1 | 50 | 48 | 3 | 2 ‡1 | 100 | 22 | 70 | 30 | 400 | 150 |
| Comp. Ex. 3 | 1 | 50 | 50 | 3 | 0 | 100 | 22 | 60 | 40 | 420 | 158 |

| | | | | | | | | | | | |
|---|---|---|---|---|---|---|---|---|---|---|---|
| ‡1 Cellulose powder (trade name: NP fiber) produced by Nippon Paper industries Co., Ltd. ‡2 Xantham gum (trade namme: KELZAN) produced by Sansho Co., Ltd. ‡3 Guar gum (trade name: Grinstead Guar) produced by Sansho Co., Ltd. ‡4 Salt (2 parts by weight), sugar (10 parts by weight) and shortening (10 parts by weight) were used. | | | | | | | | | | | |

**Table 3**

| | ingredients | | | | | | bread prepared | | | |
|---|---|---|---|---|---|---|---|---|---|---|
| | thickener | gluten-free cereal flour | | instant dry yeast | water | subsidiary raw material ‡1 | bubbles by naked eye obserbation | texture | 2 hours after baking | |
| | | rice Joshin-ko | corn starch | | | | | | hardness of crust portion | hardness of crumb portion |
| | (parts by weight: pbw) | (pbw) | (pbw) | (pbw) | (pbw) | (pbw) | | | (g) | (g) |
| Example 8 | water-soluble hydroxypropyl methylcellulose ‡2 1 | 50 | 50 | 3 | 85 | 22 | size of bubbles was uniform. bubbles were softly expanded. | soft texture and good swallow feeling. | 280 | 120 |
| Comp. Ex.4 | xanthan gum 1 | 50 | 50 | 3 | 85 | 22 | almost no bubbles expanded. | hard texture. | 625 | 270 |
| Comp. Ex.5 | guar gum 1 | 50 | 50 | 3 | 85 | 22 | size of bubbles was not uniform. | altough soft, sticky in mouth. poor texture. | 585 | 185 |

| | | | | | | | | | | |
|---|---|---|---|---|---|---|---|---|---|---|
| ‡1 Salt (2 parts by weight), sugar (10 parts by weight) and shortening (10 parts by weight) were used. ‡2 Same water-soluble hydroxypropyl methylcellulose as in Examlple 1 was used. | | | | | | | | | | |

## Claims

1. A dough composition comprising at least
water-soluble hydroxypropyl methylcellulose having a hydroxypropoxyl molar substitution of from 0.05 to 0.3 and a degree of methoxyl substitution of from 1.4 to 1.9, wherein hydroxypropoxyl groups are classified into substituted hydroxypropoxyl groups having hydroxyl groups of the hydroxypropoxyl groups substituted further with methoxyl groups and unsubstituted hydroxypropoxyl groups having hydroxyl groups of the hydroxypropoxyl groups unsubstituted, and a ratio (A/B) of a molar fraction (A) of the substituted hydroxypropoxyl groups to a molar fraction (B) of the unsubstituted hydroxypropoxyl groups is 0.4 or greater;
a gluten-free cereal flour; and
water.

2. The dough composition according to Claim 1, wherein said water-soluble hydroxypropyl methylcellulose is comprised in an amount of from 0.1 to 3 parts by weight based on 100 parts by weight of said gluten-free cereal flour.

3. The dough composition according to claim 1 or claim 2, wherein water is present in an amount in the range 60 to 180 parts by weight based on 100 parts by weight of said gluten free flour.

4. The dough composition according to any preceding claim, wherein the said hydroxypropyl molar substitution is in the range 0.05 to 0.1.

5. The dough composition according to any preceding claim, further comprising a leavening agent.

6. The dough composition according to claim 5, in which the leavening agent is yeast.

7. A cooked product made from the dough of any preceding claim.

8. A cooking method, in which the dough of any of claims 1 to 6 is cooked.

9. A method according to claim 8, wherein cooking is by baking and wherein the dough is leavened before being baked.

## Patentansprüche

1. Teigzusammensetzung umfassend mindestens
wasserlösliche Hydroxypropylmethylcellulose, die eine molare Hydroxypropoxylsubstitution von 0,05 bis 0,3 und einen Methoxylsubstitutionsgrad von 1,4 bis 1,9 aufweist, wobei Hydroxypropoxylgruppen in substituierte Hydroxypropoxylgruppen, bei denen Hydroxylgruppen der Hydroxypropoxylgruppen des Weiteren mit Methoxylgruppen substituiert sind, und unsubstituierte Hydroxypropoxylgruppen, bei denen Hydroxylgruppen der Hydroxypropoxylgruppen unsubstituiert sind, unterteilt sind, und ein Verhältnis (A/B) einer molaren Fraktion (A) der substituierten Hydroxypropoxylgruppen zu einer molaren Fraktion (B) der unsubstituierten Hydroxypropoxylgruppen 0,4 oder mehr beträgt;
ein glutenfreies Getreidemehl; und
Wasser.

2. Teigzusammensetzung nach Anspruch 1, wobei die wasserlösliche Hydroxypropylmethylcellulose in einer Menge von 0,1 bis 3 Gewichtsteilen, auf 100 Gewichtsteile des glutenfreien Getreidemehls bezogen, enthalten ist.

3. Teigzusammensetzung nach Anspruch 1 oder Anspruch 2, wobei Wasser in einer Menge im Bereich von 60 bis 180 Gewichtsteilen, auf 100 Gewichtsteile des glutenfreien Mehls bezogen, vorliegt.

4. Teigzusammensetzung nach einem der vorhergehenden Ansprüche, wobei die molare Hydroxypropylsubstitution im Bereich von 0,05 bis 0,1 liegt.

5. Teigzusammensetzung nach einem der vorhergehenden Ansprüche, des Weiteren ein Backtriebmittel umfassend.

6. Teigzusammensetzung nach Anspruch 5, wobei das Backtriebmittel Hefe ist.

7. Gekochtes Produkt, das aus dem Teig nach einem der vorhergehenden Ansprüche hergestellt ist.

8. Kochmethode, wobei der Teig nach einem der Ansprüche 1 bis 6 gekocht wird.

9. Methode nach Anspruch 8, wobei das Kochen durch Backen erfolgt und wobei man den Teig vor dem Backen aufgehen lässt.

## Revendications

1. Composition de pâte comprenant au moins
de l'hydroxypropylméthyl cellulose soluble dans l'eau ayant une substitution molaire hydroxypropoxyl comprise entre 0,05 et 0,3 et un degré de substitution méthoxyl compris entre 1,4 et 1,9, dans laquelle les groupes hydroxypropoxyl sont classés en groupes hydroxypropoxyl substitués ayant des groupes hydroxyl des groupes hydroxypropoxyl substitués en outre par des groupes méthoxyl et des groupes hydroxypropoxyl non substitués ayant des groupes hydroxyl des groupes hydroxypropoxyl non substitués, et dont le ratio (A/B) entre une fraction molaire (A) des groupes hydroxypropoxyl substitués et une fraction molaire (B) des groupes hydroxypropoxyl non substitués est 0,4 ou supérieur ;
une farine de céréale sans gluten ; et
de l'eau.

2. Composition de pâte selon la revendication 1, dans laquelle l'hydroxypropylméthyl cellulose soluble dans l'eau est comprise dans une quantité de 0,1 à 3 parties en poids par rapport à 100 parties en poids de ladite farine de céréale sans gluten.

3. Composition de pâte selon la revendication 1 ou la revendication 2, dans laquelle l'eau est présente dans une quantité comprise entre 60 et 180 parties en poids par rapport à 100 parties en poids de ladite farine de céréale sans gluten.

4. Composition de pâte selon l'une quelconque des revendications précédentes, dans laquelle ladite substitution molaire hydroxypropyl se situe entre 0,05 et 0,1.

5. Composition de pâte selon l'une quelconque des revendications précédentes, comprenant en outre un agent de levage.

6. Composition de pâte selon la revendication 5, dans laquelle l'agent de levage est de la levure.

7. Produit cuit fait à partir de la pâte selon l'une quelconque des revendications précédentes.

8. Méthode de cuisson utilisée pour cuire la pâte selon l'une quelconque des revendications 1 à 6.

9. Méthode selon la revendication 8, dans laquelle la cuisson est réalisée au four et dans laquelle la pâte est mise à lever avant d'être cuite au four.
